# EUROPÄISCHE PATENTSCHRIFT

(11) **EP 2 893 139 B1**
(45) Veröffentlichungstag und Bekanntmachung des Hinweises auf die Patenterteilung: **19.12.2018**
(21) Anmeldenummer: 13759445.3
(22) Anmeldetag: 05.09.2013
(51) Int. Cl.: E21D 20/02, F16B 13/14

(54) **ANORDNUNG ZUR HOCHFESTEN VERANKERUNG EINES EINEN SPANNSTAB AUFWEISENDEN SPANNGLIEDS IN EINEM BAUTEIL SOWIE VERFAHREN ZUR HERSTELLUNG EINER SOLCHEN VERANKERUNG**
ARRANGEMENT FOR THE HIGH-STRENGTH ANCHORAGE OF A TENDON HAVING A TIE ROD IN A STRUCTURAL ELEMENT AND METHOD FOR PRODUCING AN ANCHORAGE OF THIS TYPE
ENSEMBLE D'ANCRAGE HAUTE RÉSISTANCE D'UN ÉLÉMENT DE PRÉCONTRAINTE DANS UNE PIÈCE, L'ÉLÉMENT DE PRÉCONTRAINTE COMPORTANT UNE TIGE DE PRÉCONTRAINTE, ET PROCÉDÉ DE PRODUCTION DUDIT ANCRAGE

(30) Priorität: 07.09.2012 DE 102012017704
(43) Veröffentlichungstag der Anmeldung: 15.07.2015
(73) Patentinhaber: Dywidag-Systems International GmbH, 80796 München (DE)
(72) Erfinder: JUNGWIRTH, Dieter, 83646 Wackersberg (DE); DEMELT, Armin, 40822 Mettmann (DE); DOTZLER, Friedrich, 80796 München (DE)
(74) Vertreter: Herzog, Markus
(86) Internationale Anmeldenummer: PCT/EP2013/002668
(87) Internationale Veröffentlichungsnummer: WO 2014/037113

(56) Entgegenhaltungen:
- WO-A1-02/103212
- CH-A- 422 683
- US-A- 4 413 929
- US-A- 5 807 051
- ISCHEBECK E F: "NEUE ANKERTECHNOLOGIE FUER SICHERUNGS- UND GRUENDUNGSARBEITEN", GLUCKAUF, MINOVA CARBO TECH GMBH., ESSEN, DE, Bd. 136, Nr. 1/02, 17. Februar 2000 (2000-02-17), Seiten 43-46, XP000908307, ISSN: 0340-7896

## Beschreibung

### Technisches Gebiet:

Die Erfindung betrifft eine Anordnung zur hochfesten Verankerung eines einen Spannstab aufweisenden Spannglieds in einem Bauteil gemäß dem Oberbegriff des Patentanspruchs 1 sowie ein Verfahren zur hochfesten Verankerung eines Spannglieds gemäß dem Oberbegriff des Patentanspruchs 17.

Hochfeste Verankerungen sind beispielsweise im Hochbau oder konstruktiven Ingenieurbau anzutreffen, wo mit Hilfe interner oder externer Spannglieder Lasten aus einem Tragwerk in dazu bestimmte Bauteile wie zum Beispiel Fundamente, Widerlager oder dergleichen abgeleitet werden. Dazu müssen die Spannglieder mit ihren Enden im Tragwerk bzw. Bauteil kraftschlüssig verankert sein. Mögliche Anwendungsfälle betreffen beispielsweise Dachkonstruktionen von Sportstadien, deren auskragende Dachträger mittels Spannglieder rückseitig in entsprechende Fundamente abgespannt sind oder Brückenbauwerke.

Unter hochfester Verankerung im Sinne der Erfindung werden Verankerungen bezeichnet, die in der Lage sind, Zugkräfte aus einem Spannglied aufzunehmen, die mindestens 600 kN betragen und im Regelfall zwischen 800 kN und 1500 kN liegen, aber auch darüber. Um Kräfte in dieser Größenordnung übertragen zu können, besitzen die zu verankernden Spannglieder Spannstäbe mit einer Nennzugfestigkeit von mindestens 800 N/mm²; gebräuchlich sind Spannstäbe mit einer Festigkeit von bis zu 1050 N/mm² und mehr. Die maximal aufnehmbare Kraft der Spannstäbe ist neben der Festigkeit auch von ihrem Durchmesser abhängig, der im Regelfall mindestens 32 mm beträgt. Weitere Spannstäbe weisen beispielsweise Durchmesser von 36 mm, 40 mm und 47 mm auf. Derartige Spannglieder sind unter anderem in der Europäischen Technischen Zulassung ETA-05/0123 für das DYWIDAG-Stabspannverfahren beschrieben. Aufgrund der hohen Verankerungskräfte unterscheidet sich vorliegende Erfindung grundsätzlich von der allgemeinen Befestigungstechnik, wo beispielsweise Klebeanker in Bohrungen eingeklebt werden.

### Stand der Technik:

Zur hochfesten Verankerung von Spanngliedern in einem Bauteil ist es bekannt, den das Spannglied aufnehmenden Kanal durchgehend auszubilden, also bis zur Rückseite des Bauteils, wo das Spannglied mit Hilfe einer sich auf der Bauteiloberfläche abstützenden Ankerplatte und einer Spannmutter verankert ist. Diese Art der Verankerung hat sich bestens bewährt, setzt jedoch voraus, dass das Bauteil von seiner Rückseite her frei zugänglich ist, was bei bestimmten Bauteilen wie z.B. Fundamenten nicht der Fall ist.

Ist die Zugänglichkeit nur von einer Seite des Bauteils gegeben, so muss die Verankerung des Spannglieds von der Mündungsseite des Kanals her erfolgen. In diesem Zusammenhang ist es bekannt, Sacklochbohrungen in das Bauteil einzubringen, in die ein mit einem Spreizkopf versehenes Ende eines Spannstabs eingeführt wird. Der Spreizkopf weist Klemmbacken auf, die beim Spannen des Spannstabs radial nach außen gegen die Bohrlochwandung gepresst werden, so dass der Spannstab durch den dabei erzeugten Form- und Reibschluss im Bohrloch festgelegt ist.

Zur Verankerung lediglich niedriger Kräfte sind unter anderem sogenannte "Klebeanker" bekannt, bei denen ein Zugstab oder eine Gewindestange in eine Bohrung eingeklebt ist. Als Kleber werden hauptsächlich Zweikomponentenkleber verwendet. Beispiele für derartige Verankerungen mit Verankerungskräften deutlich unterhalb 100 kN sind in den Dokumenten US 4,211,049, DE 40 17 032 A1, WO 2006/048110 A1, EP 0 713 014 A2 und GB 2 241 759 A beschrieben. Aus der EP 1 491 814 ist zudem eine Befestigungsvorrichtung eines Maschinenfußes bekannt, mit einem Ankerschaft mit endseitig angeordneten Gewindescheiben, der über seine gesamte Länge vollständig in eine Aussparung eines Maschinenfundaments einbetoniert ist, und dessen oberes Ende ein Gewinde zum Einschrauben einer Dehnschraube bzw. eines Gewindebolzens aufweist, mit dem der Maschinenfuß befestigt wird. Auch die von dieser Vorrichtung aufnehmbaren Kräfte sind viel zu gering, um die Anforderungen an eine hochfeste Verankerung im Sinne der Erfindung erfüllen zu können.
Aus der WO 02/103212 ist eine Anordnung nach dem Oberbegriff des Anspruchs 1 bekannt.

### Darstellung der Erfindung:

Vor diesem Hintergrund besteht die Aufgabe der Erfindung darin, eine hochfeste Verankerung für Spannglieder bereitzustellen, die einerseits eine sichere Verankerung auch bei kurzer Verankerungslänge im Kanal gewährleistet, gleichzeitig aber auch in wirtschaftlicher Hinsicht mit vertretbarem Aufwand realisiert werden kann. Eine weitere Aufgabe der Erfindung besteht in der Schaffung einer Möglichkeit, schadhafte Spannglieder möglichst einfach und sicher durch neue Spannglieder ersetzen zu können.

Diese Aufgabe wird durch eine Anordnung mit den Merkmalen des Patentanspruchs 1 und ein Verfahren mit den Merkmalen des Patentanspruchs 17 gelöst.

Vorteilhafte Ausführungsformen ergeben sich aus den Unteransprüchen.

Die Erfindung basiert auf dem Gedanken, ein Spannglied mit seinem im Kanal befindlichen Endabschnitt, der sogenannten Verankerungslänge, in Kraftschluss mit dem Bauteil zu bringen. Der Spannstab eines erfindungsgemäßen Spannglieds ist also der Länge nach unterteilt in eine dem Kanalgrund zugeordnete Verankerungslänge und eine sich in Richtung des gegenüberliegenden Endes anschließende freie Länge. Im Bereich der Verankerungslänge wird die Spannkraft vom Spannstab auf das Bauteil übertragen, indem der Spannstab mittels einer erhärtenden Vergussmasse in kraftschlüssigen Verbund mit der Kanalwandung gebracht wird. Die Verankerungslänge entspricht daher der zur Übertragung einer vorhandenen Spannkraft notwendigen Einbindetiefe des Spannstabs in den mit Vergussmasse gefüllten Abschnitt des Kanals. Im Bereich der freien Länge hingegen kann sich der Spannstab beim Spannen gegenüber der Kanalwandung elastisch dehnen. Die Tragkraft eines Spannglieds ist nicht nur von der Festigkeit des Spannstabs abhängig, sondern auch von der über die Verankerungslänge maximal übertragbaren Kraft. Diese wird zum einen vom Verbund in der Kontaktfläche zwischen Spannstab und Vergussmasse und zum anderen vom Verbund in der Kontaktfläche zwischen Kanalwandung und Vergussmasse maßgeblich bestimmt. Eine ausreichende Verankerungslänge ist daher notwendig, um die Spannkraft sicher in das Bauteil eintragen zu können.

Die Verankerungskräfte hochfester Verankerungen betragen mindestens 600 kN und liegen im Regelfall zwischen 800 kN und 1500 kN, können aber über 2000 kN betragen. Um solche Kräfte bei vertretbaren Durchmessergrößen aufnehmen zu können, besitzen die zu verankernden Spannstäbe eine Nennzugfestigkeit von mindestens 800 N/mm², vorzugsweise von mindestens 1000 N/mm². Die Durchmesser der Spannstäbe liegen dabei in einem Bereich von 32 mm bis 47 mm, insbesondere in einem Bereich von 36 mm bis 40 mm.
In der Praxis stellt sich immer wieder das Problem, dass aufgrund konstruktiver Gegebenheiten eine für die Einleitung der vorhandenen Spannkraft nur unzureichende Verankerungslänge zur Verfügung steht, die Kontaktfläche zur Ausbildung eines ausreichenden Verbunds also nicht durch Verlängerung der Einbindetiefe entsprechend vergrößert werden kann. Die Erfindung löst diese Problematik, indem die in der Fläche des Verbundes ruhenden Kraftreserven besser genutzt werden.
Zum einen ermöglicht das der gute Verbund zwischen Vergussmasse und Spannstab, zum anderen werden durch Vorsehen mindestens eines umlaufenden Bundes am Ende eines erfindungsgemäßen Spannstabs die ansonsten zum Ende der Verankerungslänge auf niedrigem Niveau auslaufenden, den Verbund bewirkenden Scherspannungen auf ein höheres Kraftniveau gebracht. Da die übertragbare Spannkraft dem Integral der Scherspannungen über die Verbundfläche entspricht, kann mit dieser Maßnahme auch bei extrem kurzer zur Verfügung stehender Einbindetiefe eine noch ausreichende Spannkraft in das Bauteil eingetragen werden, um eine sichere und definierte Verankerung zu gewährleisten. So genügen Dank der Erfindung bereits Verankerungslängen von maximal dem 15-fachen Durchmesser des Spannstabs, vorzugsweise von maximal dem 7-fachen Durchmesser des Spannstabs zur sicheren Verankerung der Kräfte aus dem Spannstab. Ein erfindungsgemäß ausgebildetes Spannglied kann daher auch noch eingesetzt werden, wo bekannte Spannglieder bereits versagen und daher auf aufwändige Ersatzmaßnahmen ausgewichen werden muss.

Diese Vorteile kommen unter anderem bei der Sanierung von Bauwerken zu tragen, wo schadhafte Spannglieder durch neue zu ersetzen sind. Die Erfindung ermöglicht dabei ein Vorgehen, bei dem das bestehende Spannglied im Bereich der Verankerung zum Beispiel überbohrt und mit dem Bohrkern entfernt wird. Der dabei entstehende Kanal kann dann für eine erfindungsgemäße Verankerungsanordnung genutzt werden.
Vorzugsweise ist der Außendürchmesser des Bundes auf den Durchmesser des Kanals abgestimmt. Indem der Bunddurchmesser mindestens dem 0,7-fachen Kanaldurchmesser entspricht, ist sichergestellt, dass sich auch im Endbereich der Verankerungslänge in ausreichendem Umfang Stützlinien ausbilden, entlang derer die Spannkraft vom Spannstab auf die Kanalwandung übertragen wird. Gleichzeitig wird durch den genannten Mindestdurchmesser des Bundes im Verhältnis zum Kanaldurchmesser gewährleistet, dass der Spannstab im Kanal zentriert ist. Um dennoch ein problemloses Einführen des Spannstabs in den Kanal zu ermöglichen ist der Bunddurchmesser in vorteilhafter Weiterbildung der Erfindung auf einen Maximalwert zwischen dem 0,95-fachen und 0,99-fachen des Kanalinnendurchmessers beschränkt.

Beim Einsetzen des Spannglieds in einen mit Vergussmasse vorbereiteten Kanal umströmt die Vergussmasse den Bund in axialer Richtung, was gemäß einer einfachen Ausführungsform durch den Ringspalt zwischen Außenumfang des Bundes und der Kanalwandung geschehen kann. Um den Strömungswiderstand zu verkleinern und damit das Einsetzen des Spannglieds zu erleichtern, sieht die Erfindung Randausnehmungen am Außenumfang des Bundes vor, die axiale Strömungskanäle für den Durchtritt der Vergussmasse bilden. Bevorzugt sind mindestens zwei Randausnehmungen, beispielsweise drei, vier oder sechs Randausnehmungen, die in einheitlichem Umfangsabstand über den Außenumfang des Bundes verteilt sind. Die radiale Tiefe der Randausnehmungen ist größer als deren randseitige Breite in Umfangsrichtung, so dass die Zentrierfunktion des Bundes nicht durch die Randausnehmungen beeinträchtigt ist.

Um die Herstellung eines erfindungsgemäßen Spannglieds möglichst einfach und kostengünstig zu gestalten, besteht der Bund im Wesentlichen aus einer Ringscheibe, die mit ihrer zentralen Öffnung unverrückbar auf dem Spannstab sitzt. Die Befestigung der Ringscheibe kann beispielsweise über ein Innengewinde an der Ringscheibe erfolgen, das in Eingriff mit einem Außengewinde am Spannstab steht. Vorzugsweise sichern eine oder zwei Muttern die axiale Lage der Ringscheibe, wodurch die Ringscheibe zusätzlich verstärkt wird. Alternativ kann die Ringscheibe auch ohne Innengewinde auf den Spannstab aufgeschoben und über zwei Muttern festgelegt sein.

Ein Versagen der kanalseitigen Verankerung bei Überschreiten der maximal aufnehmbaren Last findet erwartungsgemäß in der Kontaktfuge zwischen Kanalwandung und Vergussmasse oder Außenumfang des Spannstabs und Vergussmasse statt, je nachdem wo die aufnehmbaren Scherspannungen zuerst überschritten werden. Im

Rahmen der Erfindung wurde gefunden, dass bei einem Verhältnis von Kanalinnendurchmesser zu Durchmesser des Spannstabs zwischen 3:2 und 3:1, vorzugsweise zwischen 3:2 und 5:2 oder 3:2 und 3:1 oder 3:2 und 4:1, die Scherspannungen in den beiden Kontaktfugen etwa gleich groß sind. Eine solche Dimensionierung führt zu einer weitgehend gleichmäßigen Auslastung der unterschiedlichen Komponenten der Verankerungsanordnung.

In vorteilhafter Weiterbildung der Erfindung besitzt die Wandung des Kanals eine vergrößerte Rauheit, was beispielsweise durch Abstrahlen mit einem Höchstdruckwasserstrahl bei bis zu 1500 bar erreicht werden kann. Dadurch wird der Verbund in der Kontaktfuge zwischen Kanalwandung und Vergussmasse durch zusätzlichen Formschluss vergrößert und damit die übertragbare Spannkraft gesteigert bzw. die Möglichkeit geschaffen, die Verankerungslänge zu verkürzen.

Die Vergussmasse dient der Übertragung der Spannkraft vom Spannstab auf das Bauteil. Neben einer Vergussmasse auf Basis eines zementgebundenen Mörtels, beispielsweise eines Mikrofeinzements, sieht die Erfindung den Einsatz von polymeren Vergussmassen, insbesondere von Epoxidharz-Gemischen vor, die sich durch ein ausgezeichnetes Haftvermögen auszeichnen. Die Vergussmasse weist zur Erfüllung dieser Funktion vorteilhafterweise eine Druckfestigkeit von mindestens 100 N/mm² und/oder eine Zugfestigkeit von mindestens 50 N/mm² auf. Zusätzlich können Komponenten zur Gewährleistung eines ausreichenden Korrosionsschutzes beigemengt sein, um die Eignung einer erfindungsgemäßen Verankerung für einen dauerhaften Einsatz zu steigern.

Aus dem Haftvermögen der Vergussmasse in Kombination mit der Oberflächenbeschaffenheit der Bohrlochwandung bzw. des Spannstabs ergibt sich die Verbundfestigkeit in der Kontaktfuge zwischen Vergussmasse und Kanalwandung bzw. Vergussmasse und Spannstab. Aufgrund unterschiedlicher Flächeninhalte kann die Verbundfestigkeit in der Kontaktfuge zur Kanalwandung geringer sein als die Verbundfestigkeit in der Kontaktfuge zum Spannstab, beispielsweise um bis zu 50 %, ohne die maximal aufnehmbare Verankerungskraft zu verringern. Um die Verankerungskräfte sicher in das Bauteil einleiten zu können, beträgt die Verbundfestigkeit zwischen Vergussmasse und Kanalwandung vorzugsweise mindestens 20 N/mm² und/oder die Verbundfestigkeit zwischen Vergussmasse und Spannstab mindestens 40 N/mm².

In vorteilhafter Weiterbildung der Erfindung besteht die Vergussmasse aus einem Gemisch eines Bindemittels, vorzugsweise auf Basis eines Epoxidharzes, mit mineralischen Zuschlagstoffen wie zum Beispiel Quarzsand, die ein Druckgerüst in der Vergussmasse aufbauen und gleichzeitig Kriech- und Schwindprozesse minimieren. Dabei liegt das gewichtsbezogene Mischungsverhältnis von Bindemittel zu Zuschlagstoffen vorteilhafterweise zwischen 0,9 und 1,1 und beträgt vorzugsweise 1. Bei einer solchen Ausführungsform liegt ein großer Anteil der Zuschlagstoffe unter Kontakt aneinander, wodurch aufgrund des sich dabei ergebenden Druckgerüsts sehr effektiv und dauerhaft auch hohe Lasten an die Kanalwandung übertragen werden können. Andere Zuschlagstoffe auf Basis alkalibeständiger Karbon- oder Glaspartikel liegen ebenso im Rahmen der Erfindung.

Zur Zentrierung des Spannglieds im Kanal bis zum Erhärten der Vergussmasse ist vorteilhafterweise eine Distanzscheibe in axialem Abstand zum Bund auf den Spannstab aufgebracht. Bund und Distanzscheibe stellen zusammen den koaxialen Verlauf von Spanngliedachse und Kanalachse sicher.

Um eine Anwendung der Erfindung auch bei einer stark geneigten Spanngliedachse oder sogar bei einer Verankerung über Kopf zu ermöglichen, sieht eine geeignete Ausführungsform der Erfindung die Anordnung eines Dichtungselements vor, das den Ringspalt zwischen Spannglied und Kanalwandung verschließt, um ein Austreten der Vergussmasse bis zum Erhärten zu verhindern. In diesen Fällen wird zuerst das Spannglied mit seinem Spannstab in den Kanal eingeführt und nach Abdichten des Ringspalts die Vergussmasse eingebracht, beispielsweise durch Injizieren unter Druck oder Erzeugen eines Vakuums zum Ansaugen der Vergussmasse.

### Kurze Beschreibung der Zeichnungen:

Die Erfindung wird nachstehend anhand eines in den Zeichnungen dargestellten Ausführungsbeispiels näher erläutert, wobei weitere Merkmale und Vorteile der Erfindung offenbar werden.

Es zeigt
- Fig. 1: einen Längsschnitt durch ein erfindungsgemäß verankertes Spannglied,
- Fig. 2: einen Längsschnitt durch den in Fig. 1 mit "D" gekennzeichneten Verankerungsbereich,
- Fig. 3: das Ende des in den Fig. 1 und 2 dargestellten und zu verankernden Spannglieds in einer Schrägansicht und
- Fig. 4: das Ende eines über Kopf zu verankernden Spannglieds in einer Schrägansicht mit Dichtungselement.

### Wege zur Ausführung der Erfindung und gewerbliche Verwertbarkeit:

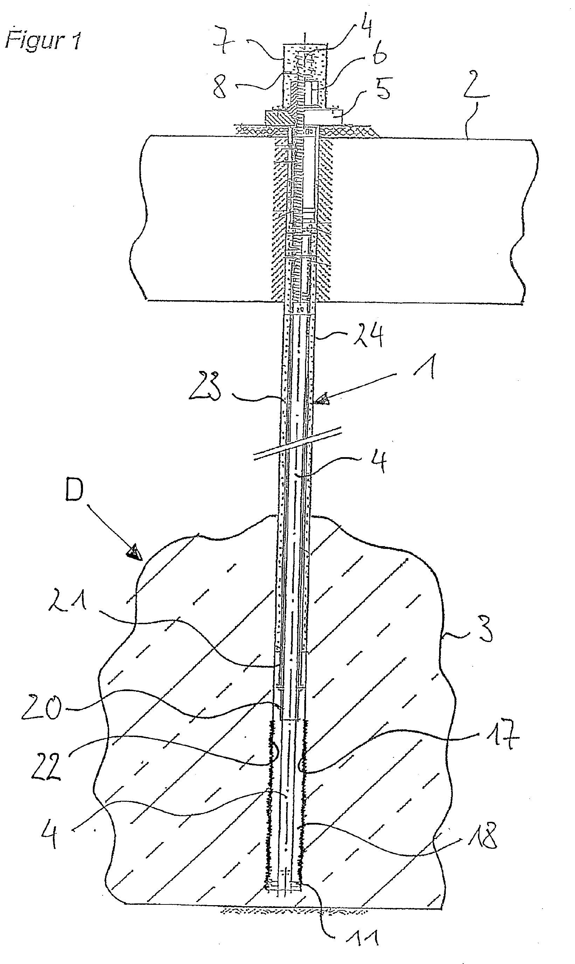

Fig. 1 zeigt ein erfindungsgemäßes Spannglied 1 in Form eines externen Spannglieds, das im vorliegenden Beispiel die Kräfte aus einem Anschlusstragwerk 2 in ein Bauteil 3 aus Beton, beispielsweise ein Fundament, einleitet, aber auch in anderem Zusammenhang verwendet werden könnte. Das Spannglied 1 kann beispielsweise im Rahmen des Austauschs eines schadhaften Spannglieds montiert werden oder aber auch für die nachträgliche Ertüchtigung eines Bauwerks durch Vorsehen zusätzlicher Spannglieder 1.

Das Spannglied 1 umfasst einen Spannstab 4 mit einer Nennzugfestigkeit von über 800 N/mm², beispielsweise 1050 N/mm². Der gezeigte Spannstab 4 ist über seine gesamte Länge mit Rippen versehen, die ein Gewinde ausbilden, kann jedoch auch von einem Glattstab mit zumindest über die Einbindetiefe aufgerolltem Gewinde gebildet sein. Im Bereich des Tragwerks 2 erstreckt sich der Spannstab 4 durch eine Ankerplatte 5, die mit Hilfe einer auf den Spannstab 4 aufgeschraubten Spannmutter 6 gegen die Oberseite des Tragwerks 2 gespannt ist und auf diese Weise die notwendige Spannkraft überträgt. Auf die Ankerplatte 5 ist eine das Ende des Spannstabs umhüllende Kappe 7 aufgesetzt, die zur Gewährleistung eines ausreichenden Korrosionsschutzes mit einer Korrosionsschutzmasse 8 gefüllt ist. Alternativ kann die Spannmutter 6 und der Überstand des Spannstabs 4 mit einer Korrosionsschutzbinde umhüllt sein.

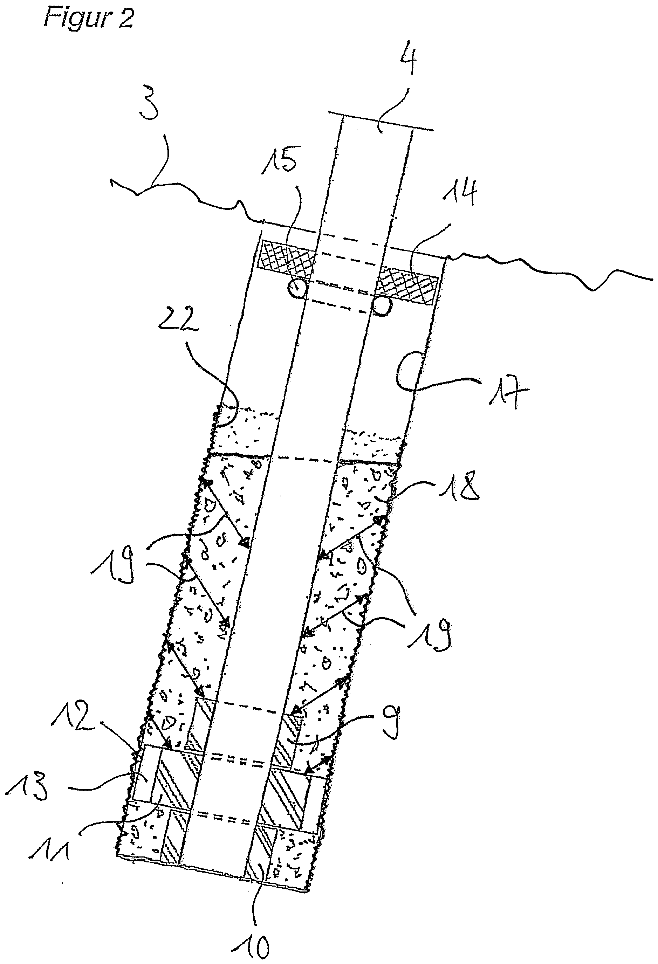

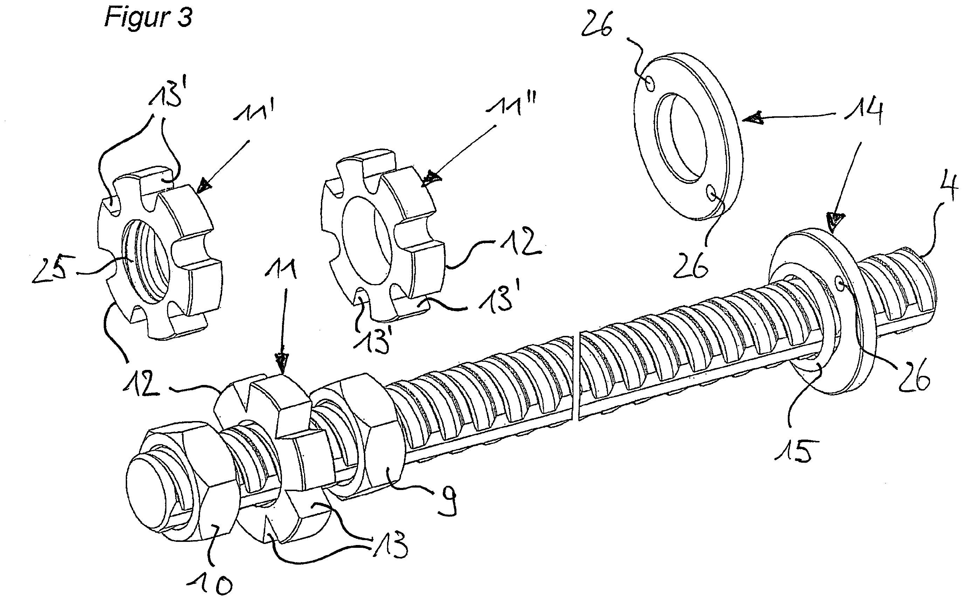

Zur Verankerung der Spannkraft im Bauteil 3 weist das Bauteil 3 einen blind endenden Kanal 17 auf. Das dem freien Ende gegenüberliegende Ende des Spannstabs 4 ist in den Kanal 17 eingeführt und dort in der nachfolgend beschriebenen Art und Weise verankert. Dieser Verankerungsbereich ist in Fig. 2 in größerem Maßstab dargestellt, während Figur 3 in einer isometrischen Ansicht die Zusammensetzung des in erfindungsgemäßer Weise ausgebildeten Endes des Spannstabs 4 zeigt.

Vor allem aus Figur 3 geht hervor, dass das zur Verankerung bestimmte Ende des Spannstabs 4 frei von Verrohrungen und Korrosionsschutzmaßnahmen jeglicher Art ist. Man sieht eine auf dem Spannstab 4 sitzende Ringscheibe 11 aus höherfestem Stahl, also aus einem Stahl der Güte S 355 und höher, die zwischen zwei Muttern 9 und 10 in ihrer relativen Lage zum Spannstab 4 fixiert ist (Figur 2). Dabei bildet die Ringscheibe 11 über ihren Umfang einen sich radial zur Längsachse des Spannstabs 4 erstreckenden, den Spannstab 4 umlaufenden Bund 12. Der Durchmesser der Ringscheibe 11 ist nur geringfügig kleiner als der Durchmesser des Kanals 17 und beträgt maximal dem 0,99-fachen des Kanalinnendurchmessers, im vorliegenden Ausführungsbeispiel maximal dem 0,95-fachen des Kanalinnendurchmessers. Die Ringscheibe 11 besitzt zum Beispiel sechs vom Außenumfang ausgehende Randausnehmungen 13, die in dem in Fig. 3 dargestellten Ausführungsbeispiel V-Form besitzen. Varianten hierzu sehen Ringscheiben 11', 11" mit Innengewinde 25 und/oder U-förmigen Randausnehmungen 13' vor. Die Dicke der Ringscheiben 11, 11', 11" beträgt vorzugsweise mindestens 20 mm, im vorliegenden Beispiel mindestens 25 mm.

In axialem Abstand zur Ringscheibe 11 ist eine Distanzscheibe 14 auf den Spannstab 4 aufgeschoben, wobei ein unterhalb der Distanzscheibe 14 auf dem Spannstab 4 sitzender Gummiring 15 die Distanzscheibe 14 gegen Verrutschen sichert. Auch die Distanzscheibe 14 kann zur Erleichterung ihrer Demontage Randausnehmungen oder Bohrungen 26 aufweisen.

Ein auf diese Weise vorbereitetes Spannglied 1 wird zur Herstellung einer erfindungsgemäßen Verankerung in den Kanal 17 eingeführt, der zuvor mit einer ausreichenden Menge an Vergussmasse 18 befüllt worden ist, um die für die Übertragung der auftretenden Spannkraft vorbestimmte Einbindetiefe des Spannstabs 4 in die Vergussmasse 18 und damit eine ausreichende Verankerungslänge zu erreichen. Im vorliegenden Ausführungsbeispiel besteht die Vergussmasse 18 aus einem Gemisch aus Epoxidharz und Quarzsand, in einem Gewichtsverhältnis von ca. 1:1. Ebenso im Rahmen der Erfindung liegend sind Vergussmassen auf Basis zementgebundener Materialien, wie zum Beispiel Mikrofeinzement. Das spezifische Gewicht der Vergussmasse beträgt vorzugsweise mehr als 15 kN/m³, höchst vorzugsweise 20 kN/m³ oder mehr, so dass eventuell vorhandenes Wasser im Kanal 17 verdrängt wird. Zur besseren Kraftübertragung kann die Rauheit der Wandung des Kanals 17 durch eine Aufrauung 22 vergrößert werden. Zu diesem Zweck kann beispielsweise das Korngerüst des Betons freigelegt werden, indem die Kanalwandung mit einem Höchstdruckwasserstrahlverfahren aufgeraut wird. Als ausreichende Verankerungslänge genügen der Verankerung infolge des erfindungsgemäßen Zusammenwirkens von Spannstab 4, Vergussmasse 18 und Kanal 17 bereits 25 cm, was den Anwendungsbereich der Erfindung gegenüber konventionellen Verankerungen erheblich erweitert.

Beim axialen Einsetzen des Endes des Spannstabs 4 in den Kanal 17 taucht zunächst die Mutter 10 und dann die Ringscheibe 11 in die Vergussmasse 18 ein, wobei die Randausnehmungen 13 axiale Kanäle bilden, die den Durchtritt der unterhalb der Ringscheibe 11 vorhandenen Vergussmasse 18 in den Bereich oberhalb der Ringscheibe 11 ermöglichen. Gleichzeitig sorgt die Ringscheibe 11 mit dem an der Kanalwandung anliegenden Außenumfang für eine Zentrierung des Spannstabs 4 innerhalb des Kanals 17. Die oberhalb der Vergussmasse 18, aber noch innerhalb des Kanals 17 angeordnete Distanzscheibe 14 stützt sich ebenfalls mit ihrem Außenumfang an der Kanalwandung ab und gewährleistet auf diese Weise einen koaxialen Verlauf des Spannstabs 4 zur Kanallängsachse. Der Spannstab 4 wird soweit axial in den Kanal 17 eingeschoben, bis die zur Verankerung der Spannkraft notwendige Einbindetiefe erreicht ist.

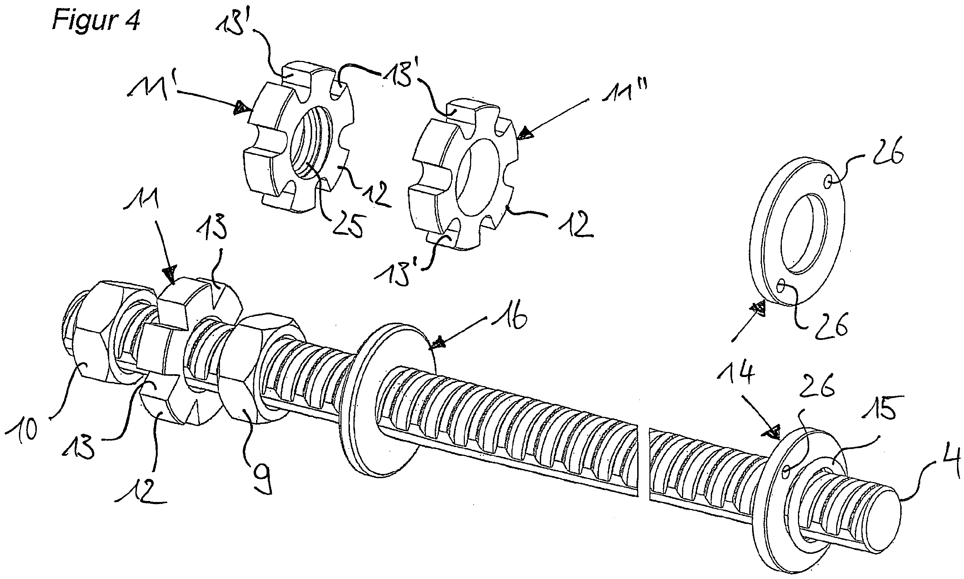

Figur 4 zeigt eine Abwandlung der vorbeschriebenen Ausführungsform der Erfindung, die sich vor allem zur Verankerung stark geneigter oder über Kopf zu installierender Spannglieder 1 eignet. Dabei wird der Spannstab 4 vor Einbringen der Vergussmasse 18 in den Kanal 17 eingebaut und fixiert. Ein ringscheibenförmiges Dichtungselement 16, das mit seiner zentrischen Öffnung auf den Spannstab 4 aufgeschoben ist, verschließt und dichtet den Ringspalt zwischen Spannstab 4 und Innenwandung des Kanals 17. Die Vergussmasse 18 wird dann als Verguss, Injektion oder durch Erzeugen eines Vakuums nachträglich in den zwischen Dichtungselement 16 und Kanalgrund liegenden Abschnitt des Kanals 17 eingebracht.

Nach ihrem Erhärten bildet die Vergussmasse 18 einen starren Druckkörper, der die beim Spannen in den Spannstab 4 eingebrachten Kräfte auf die Kanalwandung und damit in das Bauteil 3 überträgt. Die sich dabei ausbildenden Stützlinien sind in Figur 2 mit dem Bezugszeichen 19 gekennzeichnet.

Wie aus Figur 1 hervorgeht ist zur Gewährleistung eines ausreichenden Korrosionsschutzes im Bereich der freien Länge des Spannglieds 4 ein auf seiner Innenseite mit Korrosionsschutzmasse versehener Schrumpfschlauch 20 auf den Spannstab 4 aufgebracht, der zudem von einem PE-Rohr 21 ummantelt ist. Zusätzlichen Schutz gegen mechanische und chemische Einwirkungen, aber auch zur mechanischen Stützung des Zugglieds 1 in der freien Strecke, bietet die Kanalwandung oder gegebenenfalls eine äußere Verrohrung 24 bei freiliegendem Verlauf, die zum Beispiel mit dem PE-Rohr 21 oder dem Kanal 17 einen Ringraum einschließt, der mit einem Spezialmörtelverguss 23 ausgefüllt ist.

## Patentansprüche

1. Anordnung zur hochfesten Verankerung eines einen Spannstab (4) aufweisenden Spannglieds (1) in einem Bauteil (3), wozu das Bauteil (3) einen Kanal (17) aufweist, in den das zu verankernde Ende des Spannstabs (4) eingeführt ist und mittels einer erhärtbaren Vergussmasse (18) in kraftschlüssigen Verbund mit der Wandung des Kanals (17) gebracht ist, wobei der Spannstab (4) im Bereich seines zu verankernden Endes mindestens einen umlaufenden Bund (12) besitzt, der zur Wandung des Kanals (17) ein radiales Spiel aufweist,
**dadurch gekennzeichnet, dass** die Anordnung zur Verankerung des Spannglieds in dem Bauteil mit einer Verankerungskraft von mindestens 600KN ausgebildet ist, und dass der Bund (12) an seinem Außenumfang zur Bildung mindestens eines axialen Durchlasses mindestens eine Randausnehmung (13) aufweist, welche einen axialen Strömungskanal für den Durchtritt der Vergussmasse bildet, wobei eine radiale Tiefe der Randausnehmung größer ist als deren randseitige Breite in Umfangsrichtung.

2. Anordnung nach Anspruch 1, **dadurch gekennzeichnet, dass** der maximale Außendurchmesser des Bundes (12) mindestens dem 0,7-fachen des Innendurchmessers des Kanals (17) entspricht.

3. Anordnung nach einem der Ansprüche 1 bis 2, **dadurch gekennzeichnet, dass** der Bund (12) an seinem Außenumfang drei, vier oder sechs Randausnehmungen (13) aufweist.

4. Anordnung nach einem der Ansprüche 1 bis 3, **dadurch gekennzeichnet, dass** der Bund (12) von einer Ringscheibe (11) gebildet ist, die ortsfest auf dem Spannstab (4) befestigt ist, vorzugsweise durch eine oder zwei Muttern (9, 10).

5. Anordnung nach Anspruch 4, **dadurch gekennzeichnet, dass** der Spannstab (4) ein Außengewinde und die Ringscheibe (11) ein Innengewinde aufweist und die Ringscheibe (11) mit ihrem Innengewinde auf den Spannstab (4) aufschraubbar und vorzugsweise mit einer Mutter (10) festlegbar ist.

6. Anordnung nach einem der Ansprüche 1 bis 5, **dadurch gekennzeichnet, dass** der Durchmesser des Kanals (17) mindestens dem 1,5-fachen Durchmesser des Spannstabes (4) entspricht.

7. Anordnung nach einem der Ansprüche 1 bis 6, **dadurch gekennzeichnet, dass** die Wandung des Kanals (17) zumindest im Bereich der Verbundstrecke eine Aufrauung (22) aufweist.

8. Anordnung nach einem der Ansprüche 1 bis 7, **dadurch gekennzeichnet, dass** die Vergussmasse (18) aus einem Epoxidharz-Gemisch oder einem zementgebundenen Mörtel besteht.

9. Anordnung nach einem der Ansprüche 1 bis 8, **dadurch gekennzeichnet, dass** die Vergussmasse von einem Bindemittel, vorzugsweise auf Basis eines Epoxidharzes, und Zuschlagstoffen gebildet ist und das gewichtsbezogene Mischungsverhältnis von Bindemittel zu Zuschlagstoffe zwischen 0,9 und 1,1 liegt, vorzugsweise 1 beträgt.

10. Anordnung nach einem der Ansprüche 1 bis 9, **dadurch gekennzeichnet, dass** die Vergussmasse (18) eine Druckfestigkeit von mindestens 100 N/mm² und/oder eine Zugfestigkeit von mindestens 50 N/mm² aufweist.

11. Anordnung nach einem der Ansprüche 1 bis 10, **dadurch gekennzeichnet, dass** die Verankerungslänge, mit der der Spannstab (4) in die Vergussmasse (18) einbindet, maximal dem 15-fachen Durchmesser des Spannstabs (4) entspricht, vorzugsweise maximal dem 7-fachen Durchmesser.

12. Anordnung nach einem der Ansprüche 1 bis 11, **dadurch gekennzeichnet, dass** die Verbundfestigkeit zwischen der Wandung des Kanals (17) und der Vergussmasse (18) mindestens 20 N/mm² beträgt.

13. Anordnung nach einem der Ansprüche 1 bis 12, **dadurch gekennzeichnet, dass** die Verbundfestigkeit zwischen der Vergussmasse (18) und dem Stahlstab (4) mindestens 40 N/mm² beträgt.

14. Anordnung nach einem der Ansprüche 1 bis 13, **dadurch gekennzeichnet, dass** auf dem im Kanal (17) verlaufenden Abschnitt des Spannstabs (4) in axialem Abstand zum Bund (12) eine Distanzscheibe (14) angeordnet ist.

15. Anordnung nach einem der Ansprüche 1 bis 14, **dadurch gekennzeichnet, dass** auf dem im Kanal (17) verlaufenden Abschnitt des Spannglieds (1) zwischen Bund (12) und Kanalmündung ein den Ringspalt zwischen Spannglied (1) und Kanalwandung abdichtendes Dichtungselement (16) angeordnet ist.

16. Anordnung nach einem der Ansprüche 1 bis 15, **dadurch gekennzeichnet, dass** der außerhalb der Verbundstrecke liegende Abschnitt des Spannstabs (4) von einem stützenden und vor Korrosion schützenden Spezialmörtelverguss (23) umgeben ist.

17. Verfahren zum hochfesten Verankern eines einen Spannstab (4) aufweisenden Spannglieds (1) in einem Bauteil (3) mit folgenden Verfahrensschritten:
a) Herstellen eines umlaufenden Bundes (12) an dem zu verankernden Ende des Spannstabs (4),
b) Herstellen eines blind endenden Kanals (17) in dem Bauteil (3) an der zu verankernden Stelle,
c) Auffüllen des Kanals (17) zumindest im Bereich der Verankerungslänge mit einer erhärtbaren Vergussmasse (18),
d) Einschieben des Spannstabs (4) in den Kanal (17) bis zum Erreichen der vorbestimmten Verankerungslänge, wobei das zu verankernde Ende des Spannstabs (4) mit umlaufendem Bund (12) in die noch nicht erhärtete Vergussmasse (18) einbindet,
wozu das Bauteil (3) den Kanal (17) aufweist, in den das zu verankernde Ende des Spannstabs (4) eingeführt ist und mittels einer erhärtbaren Vergussmasse (18) in kraftschlüssigen Verbund mit der Wandung des Kanals (17) gebracht ist, wobei der Spannstab (4) im Bereich seines zu verankernden Endes den mindestens einen umlaufenden Bund (12) besitzt, der zur Wandung des Kanals (17) ein radiales Spiel aufweist,
**dadurch gekennzeichnet, dass** die Anordnung zur Verankerung des Spannglieds in dem Bauteil mit einer Verankerungskraft von mindestens 600KN ausgebildet ist, und dass der Bund (12) an seinem Außenumfang zur Bildung mindestens eines axialen Durchlasses mindestens eine Randausnehmung (13) aufweist, welche einen axialen Strömungskanal für den Durchtritt der Vergussmasse bildet, wobei eine radiale Tiefe der Randausnehmung größer ist als deren randseitige Breite in Umfangsrichtung.

18. Verfahren nach Anspruch 17, **dadurch gekennzeichnet, dass** das Herstellen eines Kanals (17) in dem Bauteil (3) an der zu verankernden Stelle durch Überbohren einer bereits vorhandenen Verankerung im Bauteil (3) geschieht.

## Claims

1. Arrangement for the high-strength anchoring of a tendon (1) comprising a tendon bar (4) in a component (3), for which purpose the component (3) comprises a channel (17) into which the end of the tendon bar (4) to be anchored is inserted and in which said end is frictionally connected to the wall of the channel (17) by means of a settable grouting compound (18), the tendon bar (4) comprising, in the region of the end thereof to be anchored, at least one peripheral collar (12) that has radial play with respect to the wall of the channel (17), **characterised in that** the arrangement for the anchoring of the tendon in the component has an anchoring force of at least 600 kN, and **in that** the collar (12) comprises, on the outer periphery thereof and for forming at least one axial passage, at least one edge recess (13) that forms an axial flow channel for the grouting compound to pass through, a radial depth of the edge recess being larger than the edge-side width thereof in the peripheral direction.

2. Arrangement according to claim 1, **characterised in that** the maximum outer diameter of the collar (12) corresponds to at least 0.7 times the inner diameter of the channel (17).

3. Arrangement according to either claim 1 or claim 2, **characterised in that** the collar (12) comprises three, four or six edge recesses (13) on the outer periphery thereof.

4. Arrangement according to any of claims 1 to 3, **characterised in that** the collar (12) is formed of an annular washer (11) that is immovably fastened on the tendon bar (4), preferably by means of one or two nuts (9, 10).

5. Arrangement according to claim 4, **characterised in that** the tendon bar (4) comprises an external thread and the annular washer (11) comprises an internal thread, and the internal thread of the annular washer (11) can be screwed onto the tendon bar (4) and preferably secured by means of a nut (10).

6. Arrangement according to any of claims 1 to 5, **characterised in that** the diameter of the channel (17) corresponds to at least 1.5 times the diameter of the tendon bar (4).

7. Arrangement according to any of claims 1 to 6, **characterised in that** the wall of the channel (17) has a roughened portion (22) at least in the region of the bonding segment.

8. Arrangement according to any of claims 1 to 7, **characterised in that** the grouting compound (18) is made of an epoxy resin mixture or of a cement-bound mortar.

9. Arrangement according to any of claims 1 to 8, **characterised in that** the grouting compound is made of a binding agent, preferably based on an epoxy resin, and aggregates, and the mixing ratio based on weight of binding agent to aggregate is between 0.9 and 1.1, and is preferably 1.

10. Arrangement according to any of claims 1 to 9, **characterised in that** the grouting compound (18) has a compressive strength of at least 100 N/mm² and/or a tensile strength of at least 50 N/mm².

11. Arrangement according to any of claims 1 to 10, **characterised in that** the anchoring length by which the tendon bar (4) is embedded in the grouting compound (18) corresponds to at most 15 times the diameter, preferably at most 7 times the diameter, of the tendon bar (4).

12. Arrangement according to any of claims 1 to 11, **characterised in that** the bond strength between the wall of the channel (17) and the grouting compound (18) is at least 20 N/mm².

13. Arrangement according to any of claims 1 to 12, **characterised in that** the bond strength between the grouting compound (18) and the tendon bar (4) is at least 40 N/mm².

14. Arrangement according to any of claims 1 to 13, **characterised in that** a spacer washer (14) is arranged so as to be axially spaced from the collar (12) on the portion of the tendon bar (4) that extends in the channel (17).

15. Arrangement according to any of claims 1 to 14, **characterised in that** a sealing element (16) that seals the annular gap between the tendon (1) and the channel wall is arranged between the collar (12) and the channel opening on the portion of the tendon (1) that extends in the channel (17).

16. Arrangement according to any of claims 1 to 15, **characterised in that** the portion of the tendon bar (4) located outside the bonding segment is surrounded by a supporting specialty-mortar grout (23) that protects against corrosion.

17. Method for the high-strength anchoring of a tendon (1) comprising a tendon bar (4) in a component (3), comprising the following method steps:
a) producing a peripheral collar (12) on the end of the tendon bar (4) to be anchored,
b) producing a blind channel (17) in the component (3) at the point to be anchored,
c) filling the channel (17) with a settable grouting compound (18) at least in the region of the anchoring length,
d) inserting the tendon bar (4) into the channel (17) until the predefined anchoring length has been reached, the end of the tendon bar (4) to be anchored that comprises the peripheral collar (12) being embedded in the grouting compound (18) that is not yet set,
for which purpose the component (3) comprises the channel (17) into which the end of the tendon (4) to be anchored is inserted and in which said end is frictionally connected to the wall of the channel (17) by means of a settable grouting compound (18), the tendon bar (4) comprising, in the region of the end thereof that is to be anchored, the at least one peripheral collar (12) that has radial play with respect to the wall of the channel (17),
**characterised in that** the arrangement for the anchoring of the tendon in the component has an anchoring force of at least 600 kN, and **in that** the collar (12) comprises, on the outer periphery thereof and for forming at least one axial passage, at least one edge recess (13) that forms an axial flow channel for the grouting compound to pass through, a radial depth of the edge recess being larger than the edge-side width thereof in the peripheral direction.

18. Method according to claim 17, **characterised in that** a channel (17) is produced in the component (3) at the point to be anchored by overdrilling an anchoring in the component (3) that already exists.

## Revendications

1. Ensemble d'ancrage haute résistance d'un organe de précontrainte (1) présentant une tige de précontrainte (4) dans un composant (3), pour lequel le composant (3) présente un canal (17) dans lequel l'extrémité à ancrer de la tige de précontrainte (4) est introduite et est amenée au moyen d'une masse de coulée (18) durcissable en assemblage à force avec la paroi du canal (17), dans lequel la tige de précontrainte (4) possède dans la zone de son extrémité à ancrer au moins un collet tournant (12) qui présente un jeu radial par rapport à la paroi du canal (17),
**caractérisé en ce que** l'ensemble d'ancrage de l'organe de précontrainte est réalisé dans le composant avec une force d'ancrage d'au moins 600 KN, et que le collet (12) présente sur sa périphérie extérieure pour la formation d'au moins un passage axial au moins un évidement de bord (13) qui forme un canal d'écoulement axial pour le passage de la masse de coulée, dans lequel une profondeur radiale de l'évidement de bord est supérieure à sa largeur côté bord dans le sens périphérique.

2. Ensemble selon la revendication 1, **caractérisé en ce que** le diamètre extérieur maximal du collet (12) correspond au moins à 0,7 fois le diamètre intérieur du canal (17).

3. Ensemble selon l'une quelconque des revendications 1 à 2, **caractérisé en ce que** le collet (12) présente sur sa périphérie extérieure trois, quatre ou six évidements de bord (13).

4. Ensemble selon l'une des revendications 1 à 3, **caractérisé en ce que** le collet (12) est formé par un disque annulaire (11) qui est fixé fixement sur la tige de précontrainte (4), de préférence par un ou deux écrous (9, 10).

5. Ensemble selon la revendication 4, **caractérisé en ce que** la tige de précontrainte (4) présente un filet extérieur et le disque annulaire (11) présente un filet intérieur et le disque annulaire (11) peut être vissé avec son filet intérieur sur la tige de précontrainte (4) et peut être fixé de préférence avec un écrou (10).

6. Ensemble selon l'une quelconque des revendications 1 à 5, **caractérisé en ce que** le diamètre du canal (17) correspond à au moins 1,5 fois le diamètre de la tige de précontrainte (4).

7. Ensemble selon l'une quelconque des revendications 1 à 6, **caractérisé en ce que** la paroi du canal (17) présente au moins dans la zone de l'étendue d'assemblage une rugosité (22).

8. Ensemble selon l'une quelconque des revendications 1 à 7, **caractérisé en ce que** la masse de coulée (18) se compose d'un mélange de résine époxy ou d'un mortier lié par ciment.

9. Ensemble selon l'une quelconque des revendications 1 à 8, **caractérisé en ce que** la masse de coulée est formée par un liant, de préférence sur la base d'une résine époxy, et de granulats et le rapport de mélange lié au poids entre le liant et les granulats est entre 0,9 et 1,1, de préférence s'élève à 1.

10. Ensemble selon l'une quelconque des revendications 1 à 9, **caractérisé en ce que** la masse de coulée (18) présente une résistance à la pression d'au moins 100 N/mm² et/ou une résistance à la traction d'au moins 50 N/mm².

11. Ensemble selon l'une quelconque des revendications 1 à 10, **caractérisé en ce que** la longueur d'ancrage avec laquelle la tige de précontrainte (4) s'intègre dans la masse de coulée (18), correspond au maximum à 15 fois le diamètre de la tige de précontrainte (4), de préférence au maximum à 7 fois le diamètre.

12. Ensemble selon l'une quelconque des revendications 1 à 11, **caractérisé en ce que** la résistance à l'assemblage entre la paroi du canal (17) et la masse de coulée (18) s'élève à au moins 20 N/mm².

13. Ensemble selon l'une quelconque des revendications 1 à 12, **caractérisé en ce que** la résistance à l'assemblage entre la masse de coulée (18) et la tige de précontrainte (4) s'élève à au moins 40 N/mm².

14. Ensemble selon l'une quelconque des revendications 1 à 13, **caractérisé en ce qu'**un disque d'écartement (14) est agencé sur la section s'étendant dans le canal (17) de la tige de précontrainte (4) à une distance axiale du collet (12).

15. Ensemble selon l'une quelconque des revendications 1 à 14, **caractérisé en ce qu'**un élément étanche (16) rendant étanche la fente annulaire entre l'organe de précontrainte (1) et la paroi de canal est agencée sur la section s'étendant dans le canal (17) de l'organe de précontrainte (1) entre le collet (12) et l'embouchure de canal.

16. Ensemble selon l'une quelconque des revendications 1 à 15, **caractérisé en ce que** la section se trouvant en dehors de l'étendue d'assemblage de la tige de précontrainte (4) est entourée par une coulée de mortier spécial (23) en appui et protégeant de la corrosion.

17. Procédé d'ancrage haute résistance d'un organe de précontrainte (1) présentant une tige de précontrainte (4) dans un composant (3) avec les étapes de procédé suivantes :
a) la fabrication d'un collet tournant (12) sur l'extrémité à ancrer de la tige de précontrainte (4),
b) la fabrication d'un canal (17) terminant borgne dans le composant (3) sur l'endroit à ancrer,
c) le remplissage du canal (17) au moins dans la zone de la longueur d'ancrage avec une masse de coulée (18) durcissable,
d) l'insertion de la tige de précontrainte (4) dans le canal (17) jusqu'à l'atteinte de la longueur d'ancrage prédéterminée, dans lequel l'extrémité à ancrer de la tige de précontrainte (4) avec le collet tournant (12) s'intègre dans la masse de coulée (18) qui n'est pas encore durcie,
pour lequel le composant (3) présente le canal (17) dans lequel l'extrémité à ancrer de la tige de précontrainte (4) est introduite et est amenée au moyen d'une masse de coulée (18) durcissable en assemblage à force avec la paroi du canal (17), dans lequel la tige de précontrainte (4) possède dans la zone de son extrémité à ancrer l'au moins un collet (12) tournant qui présente un jeu radial par rapport à la paroi du canal (17), **caractérisé en ce que** l'ensemble d'ancrage de l'organe de précontrainte dans le composant est réalisé avec une force d'ancrage d'au moins 600 KN, et que le collet (12) présente sur sa périphérie extérieure pour la formation d'au moins un passage axial au moins un évidement de bord (13) qui forme un canal d'écoulement axial pour le passage de la masse de coulée, dans lequel une profondeur radiale de l'évidement de bord est supérieure à sa largeur côté bord dans le sens périphérique.

18. Procédé selon la revendication 17, **caractérisé en ce que** la fabrication d'un canal (17) dans le composant (3) apparaît sur l'endroit à ancrer par forage trop loin d'un ancrage déjà présent dans le composant (3).
